# EUROPEAN PATENT SPECIFICATION

(11) **EP 4 253 813 B1**
(45) Date of publication and mention of the grant of the patent: **09.12.2026**
(21) Application number: 21897618.1
(22) Date of filing: 29.10.2021
(51) Int. Cl.: F16K 31/04, F16K 27/02, F25B 41/35, F16K 31/50

(54) **ELECTRIC VALVE AND ASSEMBLY METHOD THEREFOR**
ELEKTRISCHES VENTIL UND MONTAGEVERFAHREN DAFÜR
SOUPAPE ÉLECTRIQUE ET PROCÉDÉ D'ASSEMBLAGE ASSOCIÉ

(30) Priority: 24.11.2020 JP 2020194513
(43) Date of publication of application: 04.10.2023
(73) Proprietor: Fujikoki Corporation, Tokyo 158-0082 (JP)
(72) Inventor: YOSHIDA, Tatsuya, Tokyo 158-0082 (JP); ARAI, Yusuke, Tokyo 158-0082 (JP)
(74) Representative: Ter Meer und Partner mbB
(86) International application number: PCT/JP2021/039953
(87) International publication number: WO 2022/113642

(56) References cited:
- EP-B1- 1 865 240
- CN-A- 110 005 832
- JP-A- 2003 113 954
- JP-A- 2003 130 244
- JP-A- 2003 130 244
- JP-B2- 4 390 299
- JP-Y1- S4 331 031
- US-A- 5 419 531

## Description

### Technical Field

The present invention relates to an electric valve.

### Background Art

Patent Literature 1 discloses an example of an electric valve according to the related art. The electric valve in Patent Literature 1 includes a valve body with a valve chamber. A valve member is disposed in the valve chamber. A can in a circular cylindrical shape is bonded to the valve body. The electric valve includes a magnet rotor and a stator. The magnet rotor and the stator are members of a stepping motor. The magnet rotor is disposed inside the can. The stator is disposed outside the can. The stator is housed in a housing. The housing is fixed to the valve body by screws.

### Citation List

### Patent Literature

Patent Literature 1: Japanese Unexamined Patent Application Publication No. 2018-173102

Further conventional electric valves are known from JP2003130244A and from JP4390299B2.

### Summary of Invention

### Technical Problem

However, the method for assembling the electric valve described above involves a step for fixing the housing to the valve body by screws. This causes the manufacturing cost of this electric valve to increase.

Accordingly, it is an object of the present invention to provide an electric valve capable of reducing a step for fixing a housing that houses a stator to a valve body.

### Solution to Problem

To achieve the object described above, an electric valve according to claim 1 is provided. In assembling the electric valve, the rotation stopper is inserted into the cut-out through the opening of the cut-out during insertion of the can into the stator. The rotation stopper of the second member disposed inside the cut-out of the first member restricts rotation of the housing with respect to the valve body about an axis of the can. The rotation stopper of the second member that engages with the first member restricts movement of the housing in a direction where the housing moves away from the valve body. As a result, the housing can be fixed to the valve body without screws. Therefore, it is possible to reduce a step for fixing the housing to the valve body.

In the present invention, the valve body is the first member and includes a holding groove as the cut-out. The housing is the second member and includes a mounting plate as the rotation stopper. According to the invention, the mounting plate extends toward the valve body along the axis of the can. With this configuration, the mounting plate engages with the valve body inside the holding groove and restricts the movement of the housing in the direction where the housing moves away from the valve body. As a result, the housing can be fixed to the valve body without screws. Therefore, it is possible to reduce the step for fixing the housing to the valve body.

In the present invention, the mounting plate includes a claw portion. Preferably, the valve body includes a claw receiving portion with which the claw portion engages. As a result, with a simple configuration, the housing can be fixed to the valve body.

In the present invention, preferably, when the claw portion is in contact with the inner surface of the holding groove, the mounting plate is in an elastically deformed shape. Preferably, when the claw portion engages with the claw receiving portion, the mounting plate is returned to an original shape from the elastically deformed shape. With this configuration, in assembling the electric valve, the mounting plate is inserted into the holding groove through the opening of the holding groove during the insertion of the can into the stator and moves in the insertion direction inside the holding groove. The mounting plate is in the elastically deformed shape when the claw portion is in contact with the inner surface of the holding groove. The mounting plate is returned to the original shape from the elastically deformed shape when the claw portion engages with the claw receiving portion. Therefore, it is possible to further reduce the step for fixing the housing to the valve body.

In other embodiments (not claimed) the valve body includes a claw portion. Preferably, the mounting plate includes a claw receiving portion with which the claw portion engages. As a result, with a simple configuration, the housing can be fixed to the valve body.

When the mounting plate is in contact with the claw portion (except when the claw portion engages with the claw receiving portion), the mounting plate is in an elastically deformed shape. Preferably, when the claw portion engages with the claw receiving portion, the mounting plate is returned to an original shape from the elastically deformed shape. With this configuration, in assembling the electric valve, the mounting plate is inserted into the holding groove through the opening of the holding groove during the insertion of the can into the rotor and moves in the insertion direction inside the holding groove. The mounting plate is in the elastically deformed shape when the mounting plate is in contact with the claw portion. The mounting plate is returned to the original shape from the elastically deformed shape when the claw portion engages with the claw receiving portion. Therefore, it is possible to further reduce the step for fixing the housing to the valve body.

In the present invention, a width of the mounting plate is equal to a width of the holding groove. With this configuration, it is possible to restrict more effectively the rotation of the housing with respect to the valve body about the axis of the can.

In other embodiments (not claimed) the mounting plate is press-fitted into the holding groove. As a result, with a simple configuration, the housing can be fixed to the valve body.

In other embodiments (not claimed) the mounting plate includes at least one barb that is formed to bite into the valve body. With this configuration, the housing can be more securely fixed to the valve body.

In the present invention, preferably, the housing includes a housing body made of synthetic resin and a bracket made of metal that is fixed to the housing body. Preferably, the bracket includes a bracket body in an annular plate-like shape and the mounting plate that is provided continuously with an inner peripheral edge of the bracket body. With this configuration, a sheet metal used as a material of the bracket can be saved compared to a configuration in which the mounting plate is provided continuously with an outer peripheral edge of the bracket body.

A method for assembling an electric valve (not claimed) is a method for assembling an electric valve that includes a valve body, a stator in a circular cylindrical shape, a can in a circular cylindrical shape that is bonded to the valve body and is coaxially inserted into the stator, and a housing that houses the stator. One of the valve body and the housing is a first member, and the other of the valve body and the housing is a second member. The first member includes a cut-out. The second member includes a rotation stopper that is disposed in the cut-out. The cut-out has an opening at an end portion on the second member side. The method includes moving the valve body to which the can is bonded and the housing that houses the stator close to each other along an axis of the can, inserting the can into the stator and inserting the rotation stopper into the cut-out through the opening during the inserting of the can into the stator, and engaging the rotation stopper with the first member to restrict movement of the rotation stopper toward the opening. With this configuration, the housing can be fixed to the valve body without screws. Therefore, it is possible to reduce the step for fixing the housing to the valve body.

An electric valve includes a valve body, a can in a circular cylindrical shape that is bonded to the valve body, a stator in a circular cylindrical shape into which the can is inserted, and a housing that houses the stator. The housing includes a mounting plate that extends along an axis of the can. The valve body includes a holding groove into which the mounting plate is inserted along the axis. The mounting plate and the holding groove are configured to restrict movement of the mounting plate in an opposite direction to an insertion direction inside the holding groove.

In the electric valve, the can in the circular cylindrical shape bonded to the valve body is inserted into the stator along the axis of the can. The housing that houses the stator includes the mounting plate extending along the axis of the can. The valve body has the holding groove into which the mounting plate is inserted along the axis. The mounting plate and the holding groove are configured to restrict the movement of the mounting plate in the opposite direction to the insertion direction inside the holding groove. With this configuration, the mounting plate and the holding groove restrict movement of the housing in the direction where the housing moves away from the valve body (the opposite direction to the insertion direction). As a result, the housing can be fixed to the valve body without screws. Therefore, it is possible to reduce a step for fixing the housing to the valve body.

In the electric valve, preferably, the mounting plate has a claw portion, and the valve body has a claw receiving portion with which the claw portion engages. As a result, with a simple configuration, the housing can be fixed to the valve body.

Preferably, the electric valve is configured such that when the mounting plate moves in the insertion direction inside the holding groove, the mounting plate is brought into an elastically deformed shape, and then the claw portion and the claw receiving portion engage with each other. With this configuration, in the step for inserting the can into the stator, the mounting plate is inserted into the holding groove and moves in the insertion direction inside the holding groove. The mounting plate is brought into the elastically deformed shape, and then the claw portion and the claw receiving portion engage with each other. Therefore, it is possible to further reduce the step for fixing the housing to the valve body.

In the electric valve, of the invention, a width of the mounting plate is the same as that of the holding groove. With this configuration, it is possible to restrict the rotation of the housing with respect to the valve body about the axis of the can.

In other embodiments (not claimed) the mounting plate is press-fitted into the holding groove. As a result, with a simple configuration, the housing can be fixed to the valve body.

In other embodiments (not claimed) the mounting plate includes one or more barbs that are formed to bite into the valve body. With this configuration, the housing can be more securely fixed to the valve body.

In the electric valve, preferably, the housing includes a housing body made of synthetic resin and a bracket made of metal that is fixed to the housing body. The bracket includes a bracket body in an annular plate-like shape and the mounting plate that is provided continuously with the inner peripheral edge of the bracket body. The bracket body and the mounting plate are formed by presswork. With this configuration, a sheet metal used as a material of the bracket can be saved compared to the configuration in which the mounting plate is provided continuously with the outer peripheral edge of the bracket body.

A method for assembling an electric valve (not claimed) is a method for assembling an electric valve that includes a valve body, a can in a circular cylindrical shape that is bonded to the valve body, a stator in a circular cylindrical shape into which the can is inserted, and a housing that houses the stator. The housing includes a mounting plate that extends along an axis of the can. The valve body includes a holding groove into which the mounting plate is inserted along the axis. The method for assembling the electric valve includes moving the can and the housing close to each other along the axis, inserting the can into the stator and inserting the mounting plate into the holding groove during the inserting of the can into the stator, and having the holding groove hold the mounting plate to restrict movement of the mounting plate in an opposite direction to an insertion direction inside the holding groove.

The method for assembling the electric valve includes moving the can bonded to the valve body and the housing that houses the stator close to each other along the axis of the can, inserting the can into the stator and inserting the mounting plate into the holding groove during the inserting of the can into the stator, and having the holding groove hold the mounting plate to restrict the movement of the mounting plate in the opposite direction to the insertion direction inside the holding groove. With this configuration, the housing can be fixed to the valve body without screws. Therefore, it is possible to reduce the step for fixing the housing to the valve body.

### Advantageous Effects of Invention

According to the present invention, it is possible to reduce the step for fixing the housing that houses the stator to the valve body.

### Brief Description of Drawings

[Fig. 1] Fig. 1 is a front view of an electric valve according to an embodiment not according to the present invention.
[Fig. 2] Fig. 2 is a sectional view taken along line II-II of Fig. 1.
[Fig. 3] Fig. 3 illustrates a bracket of a housing of the electric valve in Fig. 1.
[Fig. 4] Fig. 4 illustrates a fixing structure of a valve body and the housing of the electric valve in Fig. 1.
[Fig. 5] Fig. 5 illustrates a configuration of a first modification of the fixing structure in Fig. 4.
[Fig. 6] Fig. 6 illustrates a configuration of a second modification of the fixing structure in Fig. 4.
[Fig. 7] Fig. 7 illustrates a configuration of a third modification of the fixing structure in Fig. 4 according to claim 1.
[Fig. 8] Fig. 8 illustrates a configuration of a fourth modification of the fixing structure in Fig. 4 according to claim 1.
[Fig. 9] Fig. 9 illustrates a configuration of a fifth modification of the fixing structure in Fig. 4.
[Fig. 10] Fig. 10 is a sectional view illustrating a configuration of a modification of the electric valve in Fig. 1.

### Description of Embodiments

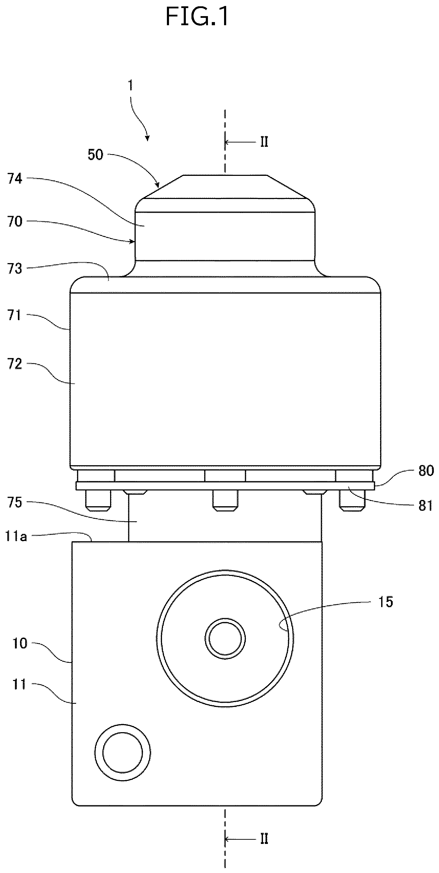

An electric valve according to an embodiment not according to the present invention is illustrated below with reference to Fig. 1 to Fig. 4.

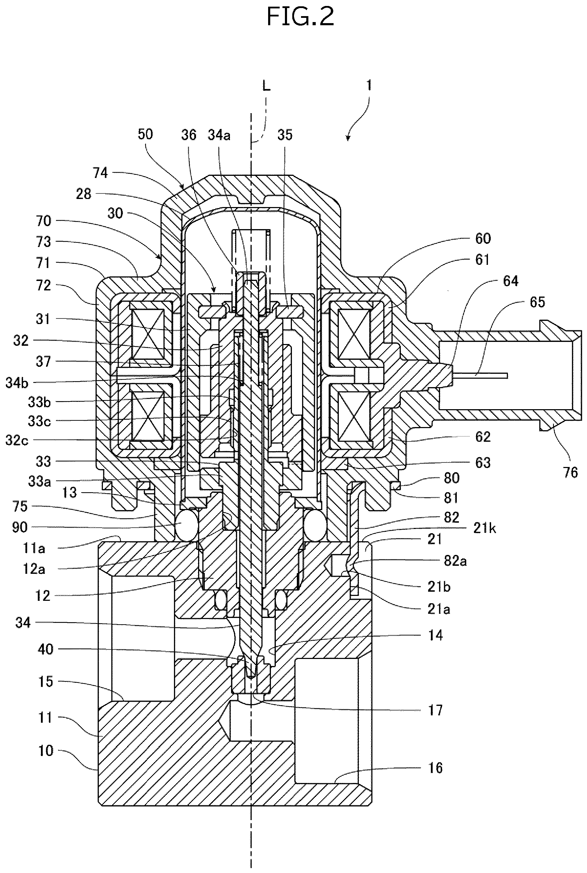

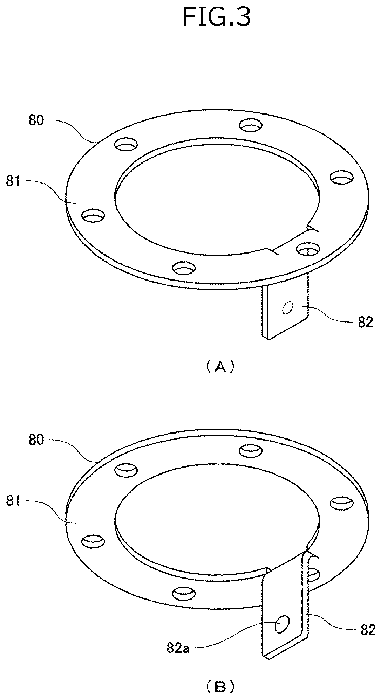

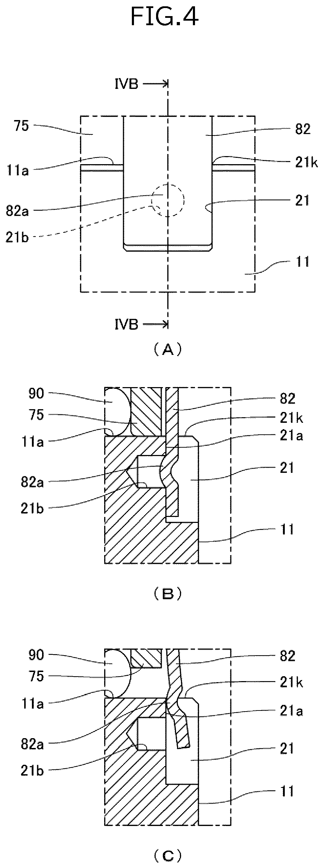

Fig. 1 is a front view of an electric valve (not claimed). Fig. 2 is a sectional view taken along line II-II of Fig. 1. Fig. 2 is also a sectional view (a longitudinal sectional view) taken along an axis of the electric valve in Fig. 1. Fig. 3 illustrates a bracket of a housing of the electric valve in Fig. 1. Fig. 3A is a perspective view of the bracket as viewed from above. Fig. 3B is a perspective view of the bracket as viewed from below. Fig. 4 illustrates a fixing structure of a valve body and the housing of the electric valve in Fig. 1. Fig. 4A is an enlarged view of a mounting plate of the housing and members in its vicinity as viewed from the back side of the housing. Fig. 4B is a sectional view taken along line IVB-IVB of Fig. 4A. Fig. 4C is a sectional view of the mounting plate in an elastically deformed shape.

As illustrated in Fig. 1 and Fig. 2, an electric valve 1 includes a valve body 10, a can 28, a driving section 30, a valve member 40, and a stator unit 50.

The valve body 10 is made of a metal such as an aluminum alloy. The valve body 10 includes a main body portion 11, a circular cylindrical portion 12, and a flange portion 13. The main body portion 11 has a rectangular parallelepiped shape. The circular cylindrical portion 12 projects from an upper surface 11a of the main body portion 11. The circular cylindrical portion 12 is mounted to the main body portion 11 by a screw structure. A valve chamber 14 and flow channels 15, 16 are provided in the main body portion 11. The flow channel 15 is connected to the valve chamber 14. The flow channel 16 is connected to the valve chamber 14 via a port 17. The flange portion 13 has an annular plate-like shape. The inner peripheral edge of the flange portion 13 is bonded to the upper end portion of the circular cylindrical portion 12. In the present embodiment, the valve body 10 is a first member.

A holding groove 21 is provided on the back surface of the main body portion 11. The holding groove 21 extends downward from the upper surface 11a in an up-and-down direction (a direction of an axis L). A recessed portion 21b is provided at a bottom surface 21a of the holding groove 21 and is a circular hole extending from the back side toward the front side of the main body portion 11 (from the right side to the left side in Fig. 2).

The holding groove 21 is a cut-out of the valve body 10. The upper end portion of the holding groove 21 has no wall surface and is open in the direction in which the holding groove 21 extends. That is, the holding groove 21 has an opening 21k at its upper end portion.

The can 28 is made of a metal such as stainless steel. The can 28 has a circular cylindrical shape that is closed at the upper end portion. The lower end portion of the can 28 is bonded to the outer peripheral edge of the flange portion 13. The axis L in Fig. 2 coincides a central axis of the can 28.

The driving section 30 moves the valve member 40 in the up-and-down direction. The driving section 30 includes a magnet rotor 31, a valve stem holder 32, a guide bush 33, and a valve stem 34.

The magnet rotor 31 has a circular cylindrical shape. The magnet rotor 31 is disposed inside the can 28. The outer diameter of the magnet rotor 31 is slightly smaller than the inner diameter of the can 28. Multiple N poles and multiple S poles are provided on the outer circumferential surface of the magnet rotor 31. The multiple N poles and multiple S poles extend in the up-and-down direction and are arranged alternately and circumferentially at equal intervals. In the present embodiment, the magnet rotor 31 includes 12 N poles and 12 S poles.

The valve stem holder 32 has a circular cylindrical shape that is closed at the upper end portion. A supporting ring 35 is fixed to the upper end portion of the valve stem holder 32. The valve stem holder 32 is integrally coupled with the magnet rotor 31 with the supporting ring 35 in between. The inner circumferential surface of the valve stem holder 32 has an internal thread 32c.

The guide bush 33 integrally includes a first circular cylindrical portion 33a and a second circular cylindrical portion 33b. The outer diameter of the second circular cylindrical portion 33b is smaller than the outer diameter of the first circular cylindrical portion 33a. The second circular cylindrical portion 33b is provided coaxially and continuously with the upper end portion of the first circular cylindrical portion 33a. The outer circumferential surface of the second circular cylindrical portion 33b has an external thread 33c. The external thread 33c is screwed into the internal thread 32c of the valve stem holder 32. The first circular cylindrical portion 33a is press-fitted into a fitting hole 12a that is provided in the circular cylindrical portion 12 of the valve body 10. The guide bush 33 is coupled to the valve body 10.

The valve stem 34 has a circular columnar shape. The valve stem 34 includes an upper end portion 34a that extends through the valve stem holder 32. A push nut 36 as a retainer is attached to the upper end portion 34a of the valve stem 34. The valve stem 34 is disposed in the guide bush 33 and the circular cylindrical portion 12. The lower end portion of the valve stem 34 is disposed in the valve chamber 14. The valve stem 34 has a step portion 34b. The step portion 34b is an annular plane facing upward. A valve closing spring 37 is disposed between the valve stem holder 32 and the step portion 34b. The valve closing spring 37 is a compression coil spring. The valve closing spring 37 pushes the valve stem 34 downward.

The valve member 40 is provided integrally at the lower end portion of the valve stem 34. The valve member 40 is disposed in the valve chamber 14. The driving section 30 moves the valve member 40 in the up-and-down direction. The movement of the valve member 40 opens and closes the port 17.

The stator unit 50 includes a stator 60 and a housing 70.

The stator 60 has a circular cylindrical shape. The stator 60 is disposed outside the can 28. The stator 60 and the magnet rotor 31 are members of a stepping motor. The stator 60 includes an upper stator 61, a lower stator 62, and a mold 63 made of synthetic resin.

The upper stator 61 is coaxially disposed on the lower stator 62. The upper stator 61 and the lower stator 62 each include multiple claw-pole-type pole teeth. The pole teeth are arranged circumferentially at equal intervals. The mold 63 fills the upper stator 61 and the lower stator 62. The mold 63 forms the inner circumferential surface of the stator 60. The mold 63 includes a terminal supporting portion 64.

In the present embodiment, the upper stator 61 includes 24 pole teeth, and the lower stator 62 includes 24 pole teeth. The stator 60 includes a total of 48 pole teeth. The lower stator 62 is at a position where the lower stator 62 is rotated relatively to the upper stator 61 about the axis L by half ((360/24)/2 = 7.5 degrees) the angle between the pole teeth from a position where the pole teeth of the upper stator 61 are aligned with the pole teeth of the lower stator 62 in the up-and-down direction. The magnet rotor 31 rotates once in response to 96 pulses input to the stator 60. A rotational angle (step angle) per pulse in the magnet rotor 31 is 3.75 degrees.

The terminal supporting portion 64 extends from the upper stator 61 and the lower stator 62 in a lateral direction. The terminal supporting portion 64 supports multiple terminals 65. The terminals 65 extend from the tip end of the terminal supporting portion 64 in the lateral direction. The terminals 65 are connected to a coil of the upper stator 61 and a coil of the lower stator 62.

The housing 70 includes a housing body 71 and a bracket 80. In the present embodiment, the housing 70 is a second member.

The housing body 71 is made of synthetic resin. The housing body 71 houses the stator 60. The housing body 71 integrally includes a peripheral wall portion 72, an upper wall portion 73, a dome portion 74, a tubular portion 75, and a connector portion 76.

The peripheral wall portion 72 has a circular cylindrical shape. The upper wall portion 73 is provided continuously with the upper end portion of the peripheral wall portion 72. The dome portion 74 projects upward from the central part of the upper wall portion 73. The can 28 is inserted into the stator 60 and the dome portion 74. The tubular portion 75 has a circular cylindrical shape with a smaller diameter than the diameter of the peripheral wall portion 72. The tubular portion 75 extends downward from the peripheral wall portion 72. The tubular portion 75 is disposed such that the tubular portion 75 encloses the circular cylindrical portion 12 of the valve body 10. The tubular portion 75 and the circular cylindrical portion 12 form a gap in which a seal 90 in an annular shape is disposed. The seal 90 is made of an elastic material such as a rubber material. The connector portion 76 has an elliptical cylindrical shape. The connector portion 76 extends from the peripheral wall portion 72 in the lateral direction. The terminal supporting portion 64 and the terminals 65 are disposed inside the connector portion 76.

The bracket 80 is made of metal. As illustrated in Fig. 3, the bracket 80 integrally includes a bracket body 81 and a mounting plate 82. The bracket body 81 has an annular plate-like shape. The bracket body 81 is fixed to the lower end of the peripheral wall portion 72 of the housing body 71. The mounting plate 82 has a rectangular plate-like shape. The mounting plate 82 is provided continuously with the inner peripheral edge of the bracket body 81 and extends downward. The mounting plate 82 extends toward the valve body 10. The bracket 80 is produced through presswork, which includes punching a sheet metal into the shape of both the bracket body 81 and the mounting plate 82 and bending the mounting plate 82 along the central axis of the bracket body 81 (the axis L). The bracket 80 may be welded to the stator 60.

The width of the mounting plate 82 (size in the left- and-right direction in Fig. 4A) is the same as that of the holding groove 21 of the main body portion 11. The width of the mounting plate 82 may be smaller than that of the holding groove 21. Preferably, difference in the angle about the axis L between the valve body 10 and the housing 70, caused by the difference in width between the mounting plate 82 and the holding groove 21, is smaller than the step angle of the stepping motor. The mounting plate 82 extends in the up-and-down direction. The mounting plate 82 is inserted downward into the holding groove 21 from the upper surface 11a side of the main body portion 11. The mounting plate 82 is inserted into the holding groove 21 through the opening 21k at the upper end portion of the holding groove 21. The housing 70 is disposed above the valve body 10. The upper end portion of the holding groove 21 is the end portion on the housing 70 side (the second member side) of the holding groove 21. The mounting plate 82 is held in the holding groove 21. The mounting plate 82 is a rotation stopper of the housing 70.

The mounting plate 82 has a projected portion 82a. The projected portion 82a protrudes from the back side toward the front side. The projected portion 82a is fitted in the recessed portion 21b of the main body portion 11. By fitting the projected portion 82a in the recessed portion 21b, the recessed portion 21b and the projected portion 82a catch (i.e., engage) each other. This restricts movement of the mounting plate 82 toward the opening 21k (upward) inside the holding groove 21. As a result, the housing 70 is fixed to the valve body 10.

In the electric valve 1, the respective axes of the circular cylindrical portion 12 of the valve body 10, the port 17 of the valve body 10, the can 28, the magnet rotor 31, the valve stem holder 32, the guide bush 33, the valve stem 34, the valve member 40, the stator 60, and the housing 70 (the dome portion 74, the tubular portion 75, and the bracket body 81) are aligned with the axis L.

The operation of the electric valve 1 is described below.

In the electric valve 1, a current is applied to the upper stator 61 and the lower stator 62 to rotate the magnet rotor 31 in one direction. The valve stem holder 32 rotates together with the magnet rotor 31. A screw-feed action between the internal thread 32c of the valve stem holder 32 and the external thread 33c of the guide bush 33 moves the valve stem holder 32 downward. The valve stem 34 moves downward together with the valve stem holder 32, and the valve member 40 closes the port 17 (a valve-closing state).

In the electric valve 1, a current is applied to the upper stator 61 and the lower stator 62 to rotate the magnet rotor 31 in the other direction. The valve stem holder 32 rotates together with the magnet rotor 31. The screw-feed action between the internal thread 32c of the valve stem holder 32 and the external thread 33c of the guide bush 33 moves the valve stem holder 32 upward. The valve stem 34 moves upward together with the valve stem holder 32, and the valve member 40 opens the port 17 (a valve-opening state).

An example of an assembly method for fixing the housing 70 to the valve body 10 is described below.

The can 28 that is bonded to the valve body 10 and the housing 70 that houses the stator 60 are moved close to each other along the axis L and the can 28 is inserted into the stator 60 and the dome portion 74. At the same time, the mounting plate 82 of the housing 70 is inserted downward into the holding groove 21 of the valve body 10 from the upper surface 11a side. "Downward" refers to an insertion direction where the mounting plate 82 is inserted into the holding groove 21. The mounting plate 82 is inserted into the holding groove 21 through the opening 21k. As the insertion of the mounting plate 82 into the holding groove 21 proceeds, as illustrated in Fig. 4C, the projected portion 82a of the mounting plate 82 moves onto the bottom surface 21a of the holding groove 21, and the mounting plate 82 is brought into an elastically deformed shape so as to be curved. As the insertion further proceeds, the mounting plate 82 is returned to the original shape from the elastically deformed shape, and as illustrated in Fig. 4A and Fig. 4B, the projected portion 82a is fitted in the recessed portion 21b of the holding groove 21. As a result, the recessed portion 21b and the projected portion 82a catch each other, and the mounting plate 82 is held inside the holding groove 21 to restrict upward movement of the mounting plate 82 (toward the opening 21k) inside the holding groove 21. The width of the holding groove 21 is the same as that of the mounting plate 82. This restricts rotation of the housing 70 with respect to the valve body 10 about the axis L. With this configuration, the housing 70 is fixed to the valve body 10.

As described above, the electric valve 1 of the present embodiment includes the valve body 10, the stator 60 in the circular cylindrical shape, the can 28 in the circular cylindrical shape that is bonded to the valve body 10 and is coaxially disposed in the stator 60, and the housing 70 that houses the stator 60. The valve body 10 has the holding groove 21. The housing 70 includes the mounting plate 82 that is disposed inside the holding groove 21. The holding groove 21 has the opening 21k at its upper end portion. The mounting plate 82 engages with the valve body 10 and the movement of the mounting plate 82 toward the opening 21k is restricted.

With this configuration, in assembling the electric valve 1, the mounting plate 82 is inserted into the holding groove 21 through the opening 21k of the holding groove 21 during the insertion of the can 28 into the stator 60. The mounting plate 82 disposed inside the holding groove 21 restricts the rotation of the housing 70 with respect to the valve body 10 about the axis L. The mounting plate 82 of the housing 70 that engages with the valve body 10 restricts movement of the housing 70 in a direction where the housing 70 moves away from the valve body 10. As a result, the housing 70 can be fixed to the valve body 10 without screws. Therefore, it is possible to reduce a step for fixing the housing 70 to the valve body 10.

The valve body 10 has the recessed portion 21b. The mounting plate 82 has the projected portion 82a that catches the recessed portion 21b. As a result, with a simple configuration, the housing 70 can be fixed to the valve body 10.

In addition, in assembling the electric valve 1, when the mounting plate 82 moves in the insertion direction (downward) inside the holding groove 21, the mounting plate 82 is brought into the elastically deformed shape, and then the recessed portion 21b and the projected portion 82a catch each other. Specifically, when the projected portion 82a is in contact with the bottom surface 21a of the holding groove 21, the mounting plate 82 is in the elastically deformed shape. When the projected portion 82a engages with the recessed portion 21b, the mounting plate 82 is returned to the original shape from the elastically deformed shape. With this configuration, in assembling the electric valve 1, the mounting plate 82 is inserted into the holding groove 21 through the opening of the holding groove 21 during the insertion of the can 28 into the stator 60 and moves in the insertion direction inside the holding groove 21. When the projected portion 82a comes into contact with the bottom surface 21a of the holding groove 21, the mounting plate 82 is brought into the elastically deformed shape. Then, when the projected portion 82a engages with the recessed portion 21b, the mounting plate 82 is returned to the original shape from the elastically deformed shape. Therefore, it is possible to further reduce the step for fixing the housing 70 to the valve body 10.

The width of the mounting plate 82 is the same as that of the holding groove 21. With this configuration, it is possible to restrict more effectively the rotation of the housing 70 with respect to the valve body 10 about the axis L.

The housing 70 includes the housing body 71 made of synthetic resin and the bracket 80 made of metal that is fixed to the housing body 71. The bracket 80 includes the bracket body 81 in the annular plate-like shape and the mounting plate 82 that is provided continuously with the inner peripheral edge of the bracket body 81. The bracket body 81 and the mounting plate 82 are formed by presswork. With this configuration, the sheet metal used as a material of the bracket 80 can be saved.

In the electric valve 1 described above, the valve body 10 has the recessed portion 21b, and the mounting plate 82 of the housing 70 has the projected portion 82a. In the electric valve 1, the valve body 10 may have a projected portion, and the mounting plate 82 of the housing 70 may have a recessed portion with which the projected portion engages. In this configuration, when the mounting plate 82 is in contact with the projected portion (except when the projected portion engages with the recessed portion), the mounting plate 82 may be in an elastically deformed shape, and when the projected portion engages with the recessed portion, the mounting plate 82 may be returned to the original shape from the elastically deformed shape.

In addition, in the electric valve 1 described above, the valve body 10 has the holding groove 21 as the cut-out, and the housing 70 has the mounting plate 82 as the rotation stopper. In the electric valve 1, the housing 70 may have a cut-out, and the valve body 10 may have the rotation stopper that is disposed inside the cut-out. For example, the electric valve 1 may have a configuration in which the valve body 10 has a protrusion (a rotation stopper) extending in the up-and-down direction on its back surface, the mounting plate 82 of the housing 70 has a slit (a cut-out) extending in the up-and-down direction, the protrusion is disposed inside the slit, and the mounting plate 82 engages with the valve body 10 and movement of the protrusion toward an opening of the slit is restricted. In this configuration, the housing 70 is a first member, and the valve body 10 is a second member. The protrusion of the valve body 10 may be press-fitted into the slit of the mounting plate 82. As a result, the movement of the housing 70 in the direction where the housing 70 moves away from the valve body 10 is restricted. In addition, the rotation of the housing 70 with respect to the valve body 10 about the axis L is restricted more effectively. Alternatively, a projected portion may be formed at an edge portion of the slit of the mounting plate 82, and a recessed portion with which the projected portion engages may be formed in the protrusion of the valve body 10. Alternatively, a claw portion may be formed at the edge portion of the slit of the mounting plate 82, and a claw receiving portion with which the claw portion engages may be formed in the protrusion of the valve body 10.

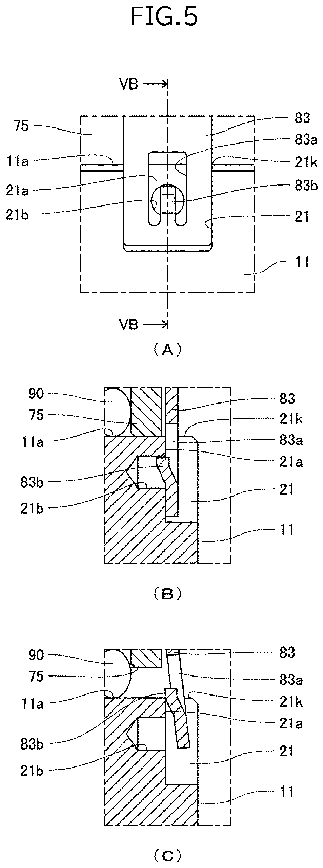

Next, configurations according to modifications of the fixing structure of the valve body 10 of the electric valve 1 and the housing 70 of the electric valve 1 described above are illustrated with reference to Fig. 5 to Fig. 9. In Fig. 5 to Fig. 9, elements having the same (including substantially the same) configurations as those of the electric valve 1 described above are denoted by the same reference signs as those of the electric valve 1 described above, and detailed descriptions of these elements are omitted.

Fig. 5 illustrates a configuration of a first modification of the fixing structure in Fig. 4. Fig. 5A is an enlarged view of a mounting plate of a housing and members in its vicinity as viewed from the back side of the housing. Fig. 5B is a sectional view taken along line VB-VB of Fig. 5A. Fig. 5C is a sectional view of the mounting plate in an elastically deformed shape.

A fixing structure illustrated in Fig. 5 includes a holding groove 21 that is provided in a valve body 10 and a mounting plate 83 that is provided in a housing 70.

The mounting plate 83 has a rectangular plate-like shape. The width of the mounting plate 83 is the same as that of the holding groove 21. The mounting plate 83 extends in an up-and-down direction. The mounting plate 83 has an opening 83a in a rectangular shape. The mounting plate 83 includes a claw portion 83b that extends upward from the lower edge of the opening 83a. The claw portion 83b protrudes from a back side toward a front side. The claw portion 83b enters a recessed portion 21b (a claw receiving portion) of a main body portion 11. The claw portion 83b is disposed inside the recessed portion 21b. The claw portion 83b entering the recessed portion 21b restricts movement of the mounting plate 83 toward an opening 21k inside the holding groove 21. The mounting plate 83 is a rotation stopper of the housing 70.

When the housing 70 is fixed to the valve body 10, the mounting plate 83 is inserted downward into the holding groove 21 from an upper surface 11a side of the main body portion 11. The mounting plate 83 is inserted into the holding groove 21 through the opening 21k. As the insertion of the mounting plate 83 into the holding groove 21 proceeds, as illustrated in Fig. 5C, the claw portion 83b of the mounting plate 83 moves onto a bottom surface 21a of the holding groove 21, and the mounting plate 83 is brought into an elastically deformed shape so as to be curved. As the insertion further proceeds, the mounting plate 83 is returned to the original shape from the elastically deformed shape, and as illustrated in Fig. 5A and Fig. 5B, the claw portion 83b enters the recessed portion 21b of the holding groove 21. That is, when the claw portion 83b is in contact with the bottom surface 21a of the holding groove 21, the mounting plate 83 is in the elastically deformed shape, and when the claw portion 83b engages with the recessed portion 21b, the mounting plate 83 is returned to the original shape from the elastically deformed shape. As a result, the recessed portion 21b and the claw portion 83b catch (i.e., engage) each other, and the mounting plate 83 is held inside the holding groove 21 to restrict upward movement of the mounting plate 83 inside the holding groove 21. Therefore, the housing 70 is fixed to the valve body 10.

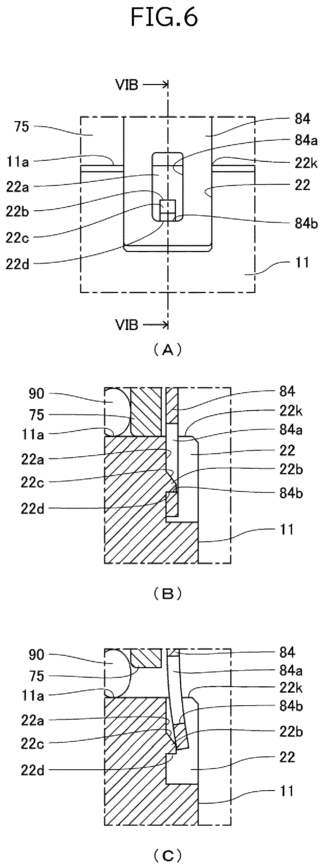

Fig. 6 illustrates a configuration of a second modification of the fixing structure in Fig. 4. Fig. 6A is an enlarged view of a mounting plate of a housing and members in its vicinity as viewed from the back side of the housing. Fig. 6B is a sectional view taken along line VIB-VIB of Fig. 6A. Fig. 6C is a sectional view of the mounting plate in an elastically deformed shape.

A fixing structure illustrated in Fig. 6 includes a holding groove 22 that is provided in a valve body 10 and a mounting plate 84 that is provided in a housing 70.

The holding groove 22 is provided in a main body portion 11 and extends downward from an upper surface 11a of the main body portion 11 in an up-and-down direction. The upper end portion of the holding groove 22 has no wall surface and is open in the direction in which the holding groove 22 extends. That is, the holding groove 22 has an opening 22k at its upper end portion. The main body portion 11 has a claw portion 22b that protrudes from a bottom surface 22a of the holding groove 22a toward the back side of the main body portion 11 (a right side in Fig. 6B). The claw portion 22b has an inclined surface 22c and a holding surface 22d. The inclined surface 22c is inclined backward while extending from top to bottom. The holding surface 22d faces downward. The holding groove 22 is a cut-out of the valve body 10.

The mounting plate 84 has a rectangular plate-like shape. The width of the mounting plate 84 is the same as that of the holding groove 22. The mounting plate 84 extends in the up-and-down direction. The mounting plate 84 has an opening 84a in a rectangular shape. The claw portion 22b enters the opening 84a. The claw portion 22b is disposed inside the opening 84a. A lower edge 84b (a claw receiving portion) of the opening 84a of the mounting plate 84 is in contact with the holding surface 22d of the claw portion 22b, which restricts movement of the mounting plate 84 toward the opening 22k inside the holding groove 22. The mounting plate 84 is a rotation stopper of the housing 70.

When the housing 70 is fixed to the valve body 10, the mounting plate 84 is inserted downward into the holding groove 22 from the upper surface 11a side of the main body portion 11. The mounting plate 84 is inserted into the holding groove 22 through the opening 22k. As the insertion of the mounting plate 84 into the holding groove 22 proceeds, as illustrated in Fig. 6C, the lower end of the mounting plate 84 moves onto the inclined surface 22c of the claw portion 22b, and the mounting plate 84 is brought into an elastically deformed shape so as to be curved. As the insertion further proceeds, the mounting plate 84 is returned to the original shape from the elastically deformed shape, and as illustrated in Fig. 6A and Fig. 6B, the claw portion 22b enters the opening 84a of the mounting plate 84. That is, when the mounting plate 84 is in contact with the claw portion 22b (except when the claw portion 22b engages with the lower edge 84b of the opening 84a of the mounting plate 84), the mounting plate 84 is in the elastically deformed shape, and when the claw portion 22b engages with the lower edge 84b of the opening 84a of the mounting plate 84, the mounting plate 84 is returned to the original shape from the elastically deformed shape. As a result, the holding surface 22d of the claw portion 22b and the lower edge 84b of the mounting plate 84 catch (i.e., engage) each other, and the mounting plate 84 is held inside the holding groove 22 to restrict upward movement of the mounting plate 84 inside the holding groove 22. Therefore, the housing 70 is fixed to the valve body 10.

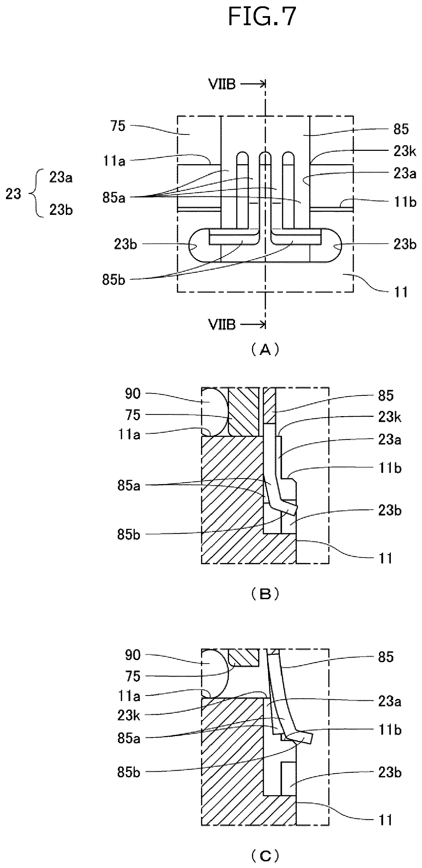

Fig. 7 illustrates a configuration of a third modification of the fixing structure in Fig. 4. Fig. 7A is an enlarged view of a mounting plate of a housing and members in its vicinity as viewed from a back side of housing. Fig. 7B is a sectional view taken along line VIIB-VIIB of Fig. 7A. Fig. 7C is a sectional view of the mounting plate in an elastically deformed shape.

A fixing structure illustrated in Fig. 7 includes a holding groove 23 that is provided in a valve body 10 and a mounting plate 85 that is provided in a housing 70.

The holding groove 23 includes, as illustrated in Fig. 7A, a first portion 23a that extends downward from an upper surface 11a of a main body portion 11, and two second portions 23b (claw receiving portions) that extend from the lower end portion of the first portion 23a in a lateral direction. The first portion 23a extends in an up-and-down direction. The upper end portion of the first portion 23a has no wall surface and is open in the direction in which the first portion 23a extends. That is, the first portion 23a has an opening 23k at its upper end portion. The second portion 23b is disposed at a position lower than a step portion 11b of the main body portion 11. The holding groove 23 is a cut-out of the valve body 10.

The mounting plate 85 has a substantially rectangular plate-like shape. The width of the mounting plate 85 is the same as that of a first portion 23a of the holding groove 23. The mounting plate 85 extends in the up-and-down direction. The mounting plate 85 includes four arm portions 85a and two claw portions 85b. The four arm portions 85a extend from the upper side to the lower side. The four arm portions 85a are arranged laterally with gaps in between. The claw portions 85b are provided continuously with lower end portions of the two central arm portions 85a of the four arm portions 85a. The two claw portions 85b extend in opposite lateral directions from parts of the arm portions 85a at which the claw portions 85b are provided continuously. The claw portions 85b enter the second portions 23b of the holding groove 23. The two claw portions 85b are disposed inside the two second portions 23b. The claw portions 85b entering the second portions 23b restricts movement of the mounting plate 85 toward the opening 23k inside the holding groove 23. The mounting plate 85 is a rotation stopper of the housing 70.

When the housing 70 is fixed to the valve body 10, the mounting plate 85 is inserted downward into the first portion 23a of the holding groove 23 from the upper surface 11a side of the main body portion 11. The mounting plate 85 is inserted into the first portion 23a through the opening 23k. As the insertion of the mounting plate 85 into the first portion 23a proceeds, as illustrated in Fig. 7C, the two claw portions 85b of the mounting plate 85 move onto the step portion 11b, and the mounting plate 85 is brought into an elastically deformed shape so as to be curved. As the insertion further proceeds, the mounting plate 85 is returned to the original shape from the elastically deformed shape, and as illustrated in Fig. 7A and Fig. 7B, the claw portions 85b enter the second portions 23b of the holding groove 23. As a result, the claw portions 85b and the second portions 23b catch (i.e., engage) each other, and the mounting plate 85 is held inside the holding groove 23 to restrict upward movement of the mounting plate 85 inside the holding groove 23. Therefore, the housing 70 is fixed to the valve body 10.

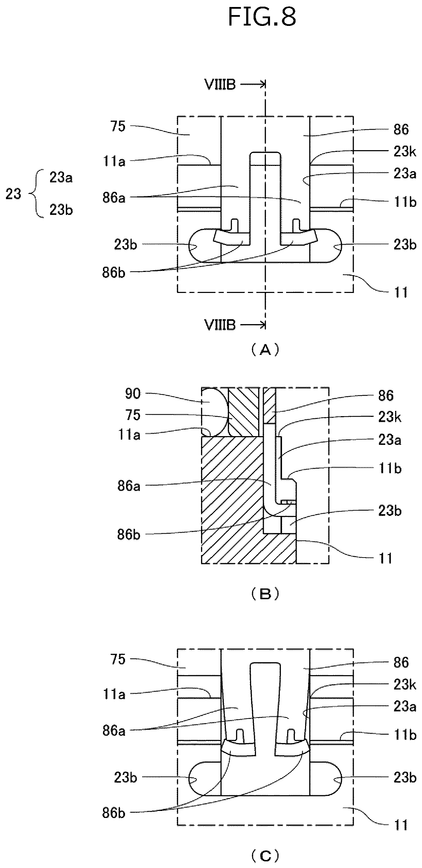

Fig. 8 illustrates a configuration of a fourth modification of the fixing structure in Fig. 4. Fig. 8A is an enlarged view of a mounting plate of a housing and members in its vicinity as viewed from a back side of the housing. Fig. 8B is a sectional view taken along line VIIIB-VIIIB of Fig. 8A. Fig. 8C is an enlarged view of a mounting plate of a housing and members in its vicinity as viewed from a back side of the housing and illustrates a state where the mounting plate is in an elastically deformed shape.

A fixing structure in Fig. 8 includes a holding groove 23 that is provided in a valve body 10 and a mounting plate 86 that is provided in a housing 70. The holding groove 23 is the same as the holding groove 23 of the third modification illustrated in Fig. 7.

The mounting plate 86 has a substantially rectangular plate-like shape. The width of the mounting plate 86 is the same as that of a first portion 23a of the holding groove 23. The mounting plate 86 extends in an up-and-down direction. The mounting plate 86 includes two arm portions 86a and two claw portions 86b. The two arm portions 86a extend from the upper side to the lower side. The two arm portions 86a are arranged laterally with a gap in between. The claw portions 86b are provided continuously with parts at the lower ends of the two arm portions 86a. The parts are the inner edges of the arm portions 86a in the width direction. The two claw portions 86b extend in opposite lateral directions from the parts of the arm portions 86a at which the claw portions 86b are provided continuously. The claw portions 86b enter second portions 23b of the holding groove 23. The two claw portions 86b are disposed inside the two second portions 23b. The claw portions 86b entering the second portions 23b restricts movement of the mounting plate 86 toward an opening 23k inside the holding groove 23. The mounting plate 86 is a rotation stopper of the housing 70.

When the housing 70 is fixed to the valve body 10, the mounting plate 86 is inserted downward into the first portion 23a of the holding groove 23 from an upper surface 11a side of the main body portion 11. The mounting plate 86 is inserted into the first portion 23a through the opening 23k. As the insertion of the mounting plate 86 into the first portion 23a proceeds, as illustrated in Fig. 8C, the two claw portions 86b of the mounting plate 86 come into contact with a step portion 11b, and the arm portions 86a and the claw portions 86b are brought into elastically deformed shapes so as to be curved inward in the width direction. As the insertion further proceeds, the arm portions 86a and the claw portions 86b are returned to the original shapes from the elastically deformed shapes, and as illustrated in Fig. 8A and Fig. 8B, the claw portions 86b enter the second portion 23b of the holding groove 23. As a result, the claw portions 86b and the second portions 23b catch (i.e., engage) each other, and the mounting plate 86 is held inside the holding groove 23 to restrict upward movement of the mounting plate 86 inside the holding groove 23. Therefore, the housing is fixed to the valve body.

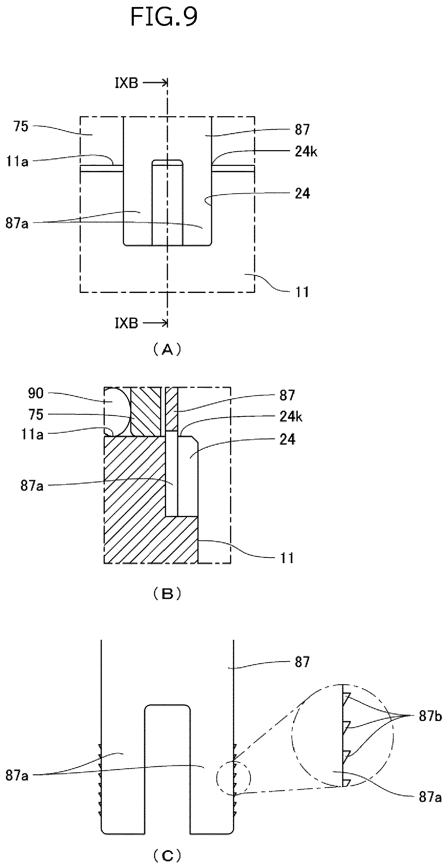

Fig. 9 illustrates a configuration of a fifth modification of the fixing structure in Fig. 4. Fig. 9A is an enlarged view of a mounting plate of a housing and members in its vicinity as viewed from a back side of the housing. Fig. 9B is a sectional view taken along line IXB-IXB of Fig. 9A. Fig. 9C is an enlarged view of the mounting plate of the housing.

A fixing structure illustrated in Fig. 9 includes a holding groove 24 that is provided in a valve body 10 and a mounting plate 87 that is provided in a housing 70.

The holding groove 24 is, as illustrated in Fig. 9A, provided in a main body portion 11 and extends downward from an upper surface 11a of a main body portion 11 in an up-and-down direction. The upper end portion of the holding groove 24 has no wall surface and is open in the direction in which the holding groove 24 extends. That is, the holding groove 24 has an opening 24k at its upper end portion. The holding groove 24 is a cut-out of the valve body 10.

The mounting plate 87 has a rectangular plate-like shape. The width of the mounting plate 87 is slightly larger than that of the holding groove 24. The mounting plate 87 extends in the up-and-down direction. The mounting plate 87 includes two arm portions 87a and multiple barbs 87b. The two arm portions 87a extend from the upper side to the lower side. The two arm portions 87a are arranged laterally with a gap in between. The multiple barbs 87b are disposed on the outer edge of the two arm portions 87a in the width direction. The multiple barbs 87b are formed in a wedge shape with their tips facing downward. The mounting plate 87 is press-fitted into the holding groove 24. The multiple barbs 87b bite into the inner surface of the holding groove 24 (i.e., the main body portion 11). This restricts movement of the mounting plate 87 toward the opening 24k inside the holding groove 24. The mounting plate 87 is a rotation stopper of the housing 70.

When the housing 70 is fixed to the valve body 10, the mounting plate 87 is inserted downward into the holding groove 24 from the upper surface 11a side of the main body portion 11. The mounting plate 87 is inserted into the holding groove 24 through the opening 24k. As the insertion of the mounting plate 87 into the holding groove 24 proceeds, the mounting plate 87 is press-fitted into the holding groove 24, and the multiple barbs 87b bite into the inner surface of the holding groove 24. As a result, the mounting plate 87 is held inside the holding groove 24 to restrict upward movement of the mounting plate 87 inside the holding groove 24. Therefore, the housing 70 is fixed to the valve body 10.

The housing 70 can be fixed to the valve body 10 with a simple configuration because the mounting plate 87 is press-fitted into the holding groove 24. The housing 70 can be more securely fixed to the valve body 10 because the mounting plate 87 includes the multiple barbs 87b formed to bite into the main body portion 11. Only one of the arm portions 87a of the mounting plate 87 may include the multiple barbs 87b. The mounting plate 87 may include only one barb 87b instead of the multiple barbs 87b. The mounting plate 87 may include no barb 87b.

The electric valves that include the fixing structures illustrated in Fig. 5 to Fig. 9 also have the functions and effects similar to or the same as those of the electric valve 1 described above. In each of the fixing structures described above, the mounting plate may be elastically deformed manually when the housing 70 is fixed to the valve body 10.

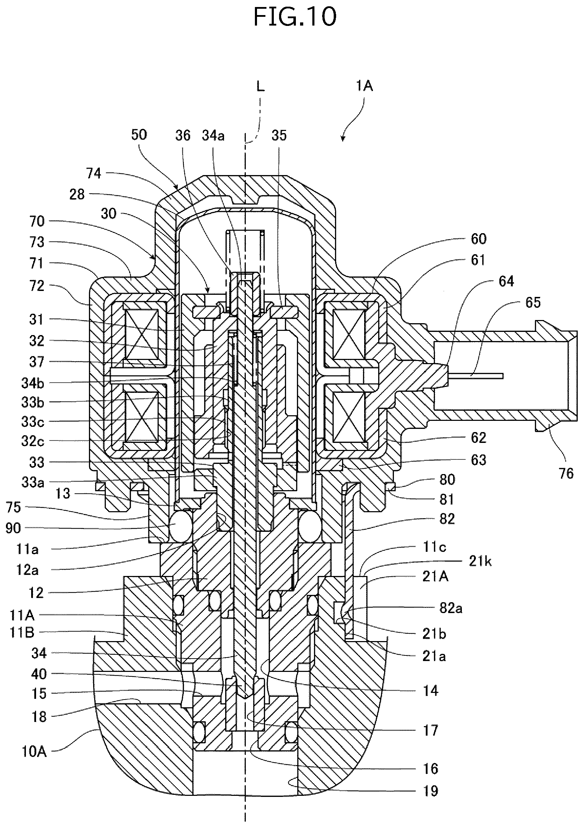

Next, a configuration according to a modification of the electric valve 1 described above is illustrated with reference to Fig. 10. An electric valve 1A illustrated in Fig. 10 has the same (including substantially the same) configuration as that of the electric valve 1 described above except that the electric valve 1A includes a valve body 10A with a main body portion 11A and a flow channel block 11B, instead of the main body portion 11. In Fig. 10, elements that are the same as those of the electric valve 1 described above are denoted by the same reference signs as those of the electric valve 1, and detailed descriptions of these elements are omitted.

The valve body 10A is made of a metal such as an aluminum alloy. The valve body 10A includes the main body portion 11A, the flow channel block 11B, a circular cylindrical portion 12, and a flange portion 13.

The main body portion 11A has a circular cylindrical shape. The main body portion 11A projects from an upper surface 11c of the flow channel block 11B. The main body portion 11A is mounted to the flow channel block 11B by a screw structure. A flow channel 18 and a flow channel 19 are provided in the flow channel block 11B. A flow channel 15 of the main body portion 11A is connected to the flow channel 18. A flow channel 16 of the main body portion 11A is connected to the flow channel 19.

A holding groove 21A is provided on the back surface of the flow channel block 11B. The holding groove 21A extends downward from the upper surface 11c. A recessed portion 21b is provided at a bottom surface 21a of the holding groove 21A and is a circular hole extending from the back side toward the front side of the flow channel block 11B (from the right side to the left side in Fig. 10). A mounting plate 82 of a housing 70 is inserted downward into the holding groove 21A from the upper surface 11c side. The mounting plate 82 is inserted into the holding groove 21A through an opening 21k. The recessed portion 21b and a projected portion 82a catch (i.e., engage) each other inside the holding groove 21A, and the mounting plate 82 is held inside the holding groove 21A and movement of the mounting plate 86 toward the opening 21k inside the holding groove 21A is restricted.

The electric valve 1A illustrated in Fig. 10 also has the functions and effects similar to or the same as those of the electric valve 1 described above.

In this specification, the terms indicating shapes, such as "circular cylindrical" and "rectangular parallelepiped", are also used for components and members having substantially the shapes indicated by the terms. For example, "a circular cylindrical member" includes a circular cylindrical member and a substantially circular cylindrical member.

The embodiments of the present invention are described above. The present invention, however, is not limited to these embodiments, the scope of the invention being defined by the appended claims.

### Reference Signs List

1, 1A ... electric valve, 10, 10A ... valve body, 11, 11A ... main body portion, 11B ... flow channel block, 11a ... upper surface, 11b ... step portion, 11c ... upper surface, 12 ... circular cylindrical portion, 12a ... fitting hole, 13 ... flange portion, 14 ... valve chamber, 15, 16 ... flow channel, 17 ... port, 18, 19 ... flow channel, 21, 21A ... holding groove, 21a ... bottom surface, 21b ... recessed portion, 21k ... opening, 22 ... holding groove, 22a ... bottom surface, 22b ... claw portion, 22c ... inclined surface, 22d ... holding surface, 22k ... opening, 23 ... holding groove, 23a ... first portion, 23b ... second portion, 23k ... opening, 24 ... holding groove, 24k ... opening, 28 ... can, 30 ... driving section, 31 ... magnet rotor, 32 ... valve stem holder, 32c ... internal thread, 33 ... guide bush, 33a ... first circular cylindrical portion, 33b ... second circular cylindrical portion, 33c ... external thread, 34 ... valve stem, 34a ... upper end portion, 34b ... step portion, 35 ... supporting ring, 36 ... push nut, 37 ... valve closing spring, 40 ... valve member, 50 ... stator unit, 60 ... stator, 61 ... upper stator, 62 ... lower stator, 63 ... mold, 64 ... terminal supporting portion, 65 ... terminal, 70 ... housing, 71 ... housing body, 72 ... peripheral wall portion, 73 ... upper wall portion, 74 ... dome portion, 75 ... tubular portion, 76 ... connector portion, 80 ... bracket, 81 ... bracket body, 82 ... mounting plate, 82a ... projected portion, 83 ... mounting plate, 83a ... opening, 83b ... claw portion, 84 ... mounting plate, 84a ... opening, 84b ... lower edge, 85 ... mounting plate, 85a ... arm portion, 85b ... claw portion, 86 ... mounting plate, 86a ... arm portion, 86b ... claw portion, 87 ... mounting plate, 87a ... arm portion, 87b ... barb, 90 ... seal

## Claims

1. An electric valve (1A) comprising:
a valve body (10A) with a main body portion (11A) and a flow channel block (11B);
a stator (60) in a circular cylindrical shape;
a can (28) in a circular cylindrical shape that is bonded to the valve body (10A) and is coaxially disposed inside the stator (60); and
a housing (70) that houses the stator (60),
wherein the valve body (10A) includes a cut-out,
wherein the housing (70) includes a rotation stopper that is disposed inside the cut-out,
wherein the cut-out has an opening at an end portion on a housing side,
wherein the rotation stopper engages with the valve body (10A) and movement of the rotation stopper toward the opening is restricted,
wherein the valve body (10A) includes a holding groove (23) provided on the back surface of the flow channel block (11B) as the cut-out,
wherein the housing (70) includes a mounting plate (85, 86) as the rotation stopper, and
wherein the mounting plate (85, 86) extends toward the valve body (10A) along an axis of the can (28),
wherein the mounting plate has a substantially rectangular plate-like shape and extends in an up-and down-direction,
**characterised in that** a width of the mounting plate (85, 86) is equal to a width of the holding groove and further **characterised in that**
(i) either the mounting plate (85) includes four arm portions (85a) and two claw portions (85b), the four arm portions (85a) extending from the upper side to the lower side and being arranged laterally with gaps in between and the claw portions (85b) being provided continuously with lower end portions of the two central arm portions (85a) of the four arm portions (85a)
(ii) or the mounting plate (86) includes two arm portions (86a) and two claw portions (86b), the two arm portions (86a) extending from the upper side to the lower side and being arranged laterally with a gap in between, the claw portions (86b) being provided continuously with parts at the lower ends of the two arm portions (86a).

2. The electric valve (1A) according to claim 1,
wherein the valve body (10A) includes a claw receiving portion (23b) with which the claw portion (85b, 86b) engages.

3. The electric valve (1A) according to claim 2,
wherein when the claw portion (85b, 86b) is in contact with an inner surface of the holding groove (23), the mounting plate (85, 86) is in an elastically deformed shape, and
wherein when the claw portion (85b, 86b) engages with the claw receiving (85b, 86b) portion, the mounting plate (85, 86) is returned to an original shape from the elastically deformed shape.

4. The electric valve (1A) according to any of claims 1-3,
wherein the housing (70) includes a housing body (71) made of synthetic resin and a bracket (80) made of metal that is fixed to the housing body (71), and
wherein the bracket (80) includes a bracket body (81) in an annular plate-like shape and the mounting plate (85, 86) that is provided continuously with an inner peripheral edge of the bracket body (81).

## Patentansprüche

1. Elektrisches Ventil (1A), umfassend:
einen Ventilkörper (10A) mit einem Hauptkörperabschnitt (11A) und einem Strömungskanalblock (11B);
einen Stator (60) in einer kreiszylindrischen Form;
ein Gehäuse (28) in einer kreiszylindrischen Form, das mit dem Ventilkörper (10A) verbunden ist und koaxial innerhalb des Stators (60) angeordnet ist; und
ein Gehäuse (70), das den Stator (60) aufnimmt,
wobei der Ventilkörper (10A) einen Ausschnitt aufweist,
wobei das Gehäuse (70) einen Drehstopper aufweist, der innerhalb des Ausschnitts angeordnet ist,
wobei der Ausschnitt eine Öffnung an einem Endabschnitt auf einer Gehäuseseite aufweist,
wobei der Drehstopper mit dem Ventilkörper (10A) in Eingriff steht und eine Bewegung des Drehstoppers in Richtung der Öffnung eingeschränkt ist,
wobei der Ventilkörper (10A) eine Haltenut (23) aufweist, die auf der Rückfläche des Strömungskanalblocks (11B) als der Ausschnitt vorgesehen ist,
wobei das Gehäuse (70) eine Montageplatte (85, 86) als den Drehstopper aufweist, und
wobei sich die Montageplatte (85, 86) in Richtung des Ventilkörpers (10A) entlang einer Achse des Gehäuses (28) erstreckt,
wobei die Montageplatte eine im Wesentlichen rechteckige plattenartige Form aufweist und sich in einer Auf- und Abwärtsrichtung erstreckt,
**dadurch gekennzeichnet, dass** eine Breite der Montageplatte (85, 86) gleich einer Breite der Haltenut ist, und ferner **dadurch gekennzeichnet, dass**
(i) entweder die Montageplatte (85) vier Armabschnitte (85a) und zwei Klauenabschnitte (85b) aufweist, wobei sich die vier Armabschnitte (85a) von der oberen Seite zu der unteren Seite erstrecken und seitlich mit Lücken dazwischen angeordnet sind und die Klauenabschnitte (85b) durchgehend mit unteren Endabschnitten der zwei mittleren Armabschnitte (85a) der vier Armabschnitte (85a) versehen sind, oder
(ii) die Montageplatte (86) zwei Armabschnitte (86a) und zwei Klauenabschnitte (86b) aufweist, wobei sich die zwei Armabschnitte (86a) von der oberen Seite zu der unteren Seite erstrecken und seitlich mit einer Lücke dazwischen angeordnet sind, wobei die Klauenabschnitte (86b) durchgehend mit Teilen an den unteren Enden der zwei Armabschnitte (86a) versehen sind.

2. Elektrisches Ventil (1A) nach Anspruch 1,
wobei der Ventilkörper (10A) einen Klauenaufnahmeabschnitt (23b) aufweist, mit dem der Klauenabschnitt (85b, 86b) in Eingriff steht.

3. Elektrisches Ventil (1A) nach Anspruch 2,
wobei, wenn der Klauenabschnitt (85b, 86b) in Kontakt mit einer Innenfläche der Haltenut (23) ist, die Montageplatte (85, 86) in einer elastisch verformten Form ist, und
wobei, wenn der Klauenabschnitt (85b, 86b) mit dem Klauenaufnahmeabschnitt (85b, 86b) in Eingriff steht, die Montageplatte (85, 86) aus der elastisch verformten Form in eine ursprüngliche Form zurückgebracht wird.

4. Elektrisches Ventil (1A) nach einem der Ansprüche 1-3,
wobei das Gehäuse (70) einen aus Kunstharz hergestellten Gehäusekörper (71) und eine aus Metall hergestellte Halterung (80) aufweist, die an dem Gehäusekörper (71) befestigt ist, und
wobei die Halterung (80) einen Halterungskörper (81) in einer ringförmigen plattenartigen Form und die Montageplatte (85, 86) aufweist, die durchgehend mit einer Innenumfangskante des Halterungskörpers (81) versehen ist.

## Revendications

1. Soupape électrique (1B) comportant :
un corps de soupape (10A) ayant une portion de corps principal (11A) et un bloc de canal d'écoulement (11B) ;
un stator (60) de forme cylindrique circulaire ;
une enveloppe (28) de forme cylindrique circulaire qui est fixée au corps de soupape (10A) et est disposée coaxialement à l'intérieur du stator (60) ; et
un boîtier (70) qui reçoit le stator (60),
dans laquelle le corps de soupape (10A) inclut une découpe,
dans laquelle le boîtier (70) inclut une butée de rotation qui est disposée à l'intérieur de la découpe,
dans laquelle la découpe a une ouverture au niveau d'une portion d'extrémité sur un côté de boîtier,
dans laquelle la butée de rotation vient en prise avec le corps de soupape (10A) et un mouvement de la butée de rotation vers l'ouverture est restreint,
dans laquelle le corps de soupape (10A) inclut une rainure de retenue (23) agencée sur la surface arrière du bloc de canal d'écoulement (11B) en tant que découpe,
dans laquelle le boîtier (70) inclut une plaque de montage (85, 86) en tant que butée de rotation, et
dans laquelle la plaque de montage (85, 86) s'étend vers le corps de soupape (10A) le long d'un axe de l'enveloppe (28),
dans laquelle la plaque de montage a une forme en forme analogue à une plaque sensiblement rectangulaire et s'étend dans une direction haut-bas,
**caractérisée en ce qu'**une largeur de la plaque de montage (85, 86) est égale à une largeur de la rainure de retenue et **caractérisée en outre en ce que**
(i) soit la plaque de montage (85) inclut quatre portions de bras (85a) et deux portions de griffe (85b), les quatre portions de bras (85a) s'étendant du côté supérieur au côté inférieur et étant agencées latéralement avec des espaces entre celles-ci, et les portions de griffe (85b) étant pourvues en continu de portions d'extrémité inférieures des portions de bras centrales (85a) des quatre portions de bras (85a)
(ii) soit la plaque de montage (86) inclut deux portions de bras (86a) et deux portions de griffe (86b), les deux portions de bras (86a) s'étendant du côté supérieur au côté inférieur et étant agencées latéralement avec un espace entre celles-ci, les portions de griffe (86b) étant pourvues en continu de parties au niveau des extrémités inférieures des deux portions de bras (86a).

2. Soupape électrique (1A) selon la revendication 1,
dans laquelle le corps de soupape (10A) inclut une portion de réception de griffe (23b) avec laquelle la portion de griffe (85b, 86b) vient en prise.

3. Soupape électrique (1A) selon la revendication 2,
dans laquelle, lorsque la portion de griffe (85b, 86b) est en contact avec une surface intérieure de la rainure de retenue (23), la plaque de montage (85, 86) a une forme élastiquement déformée, et
dans laquelle, lorsque la portion de griffe (85b, 86b) vient en prise avec la portion de réception de griffe (85b, 86b), la plaque de montage (85, 86) est ramenée à une forme d'origine à partir de la forme élastiquement déformée.

4. Soupape électrique (1A) selon l'une quelconque des revendications 1 à 3,
dans laquelle le boîtier (70) inclut un corps de boîtier (71) en résine synthétique et un support (80) en métal qui est fixé au corps de boîtier (71), et
dans laquelle le support (80) inclut un corps de support (81) ayant une forme analogue à une plaque annulaire et la plaque de montage (85, 86) est pourvue en continu d'un bord périphérique intérieur du corps de support (81).
